# FASCICULE DE BREVET EUROPEEN

(11) **EP 1 347 485 B1**
(45) Date de publication et mention de la délivrance du brevet: **01.09.2010**
(21) Numéro de dépôt: 03100562.2
(22) Date de dépôt: 07.03.2003
(51) Int. Cl.: H01H 71/08

(54) **Bloc additif pour contacteur-disjoncteur.**
Zusatzeinheit für eine Schaltschütz
Add-on unit for contactor-circuit breaker

(30) Priorité: 19.03.2002 FR 0203526
(43) Date de publication de la demande: 24.09.2003
(73) Titulaire: Schneider Electric Industries SAS, 92500 Rueil-Malmaison (FR)
(72) Inventeur: GERARD, Alain, 94170 LE PERREUX (FR); HAUDRY, Jean, 78540 VERNOUILLET (FR); LECOMTE, René, 95100 ARGENTEUIL (FR)

(56) Documents cités:
- EP-A- 0 923 185
- FR-A- 2 799 572

## Description

La présente invention concerne un bloc additif de communication, susceptible d'être adjoint à un appareil électrique principal à contacts de puissance séparables, notamment àun appareil de départ-moteur du genre comprenant un électroaimant de commande de marche-arrêt, un dispositif de protection contre les défauts électriques et un organe de commande manuelle de marche-arrêt.

Dans les appareils connus de ce type, notamment dans celui que décrit le document WO 01/27 958, on peut adjoindre un bloc additif de communication. Ce bloc comprend un boîtier rapporté frontalement contre ou dans l'appareil principal. D'autre part, on sait que les blocs additifs de signalisation habituellement associés aux disjoncteurs comprennent au moins un organe interrupteur et/ou un circuit électronique de traitement apte à communiquer avec l'appareil principal par des organes de dialogue mécanique et/ou des organes de connexion électrique.

Les blocs additifs de communication connus ne permettent pas de connecter de manière simple à l'appareil principal, soit un câblage classique de commande, soit un câblage de bus - notamment propre à un bus de terrain -, pour assurer une liaison de signalisation et de commande associée à l'appareil principal. De plus, ils ne permettent pas de redistribuer vers l'appareil principal des ordres de commande transitant par une telle liaison.

L'invention a pour but de remédier à cet inconvénient.

Selon l'invention, le boîtier du bloc additif présente sur sa face avant :
- des premières connexions, à fonction d'entrée-sortie, aptes à la connexion de conducteurs de communication, notamment de conducteurs de bus, assurant la liaison avec un dispositif externe de commande et de surveillance de l'appareil principal,
- des secondes connexions, à fonction de sortie, aptes à la connexion de conducteurs de liaison avec les bornes d'entrée de commande de l'appareil principal.

Les connexions de liaison du bloc additif avec l'extérieur et celles qui redistribuent vers l'appareil principal les signaux de commande sont rassemblées sur la face avant du bloc additif ; les autres parois du bloc additif sont donc disponibles pour d'autres fonctions, notamment des fonctions de guidage du bloc dans le boîtier principal, et de connexion électrique et de dialogue mécanique avec l'appareil principal. L'ensemble formé par l'appareil principal et le bloc additif peut dès lors être conçu avec un encombrement réduit.

Les premières connexions peuvent être des broches rassemblées dans un connecteur situé àl'avant du boîtier du bloc additif, et composées de broches d'entrée (àfonction de commande de l'appareil principal), ainsi que de broches de sortie (àfonction de signalisation de l'état de l'appareil principal). Les premières connexions peuvent comprendre des connexions d'alimentation, notamment pour un circuit électronique de traitement situé dans le bloc additif ou un organe inverseur.

Les secondes connexions sont avantageusement au nombre de trois, deux connexions étant affectées à un signal de marche-arrêt de l'appareil et la troisième connexion à un signal d'inversion de sens de marche de l'appareil.

Le bloc additif peut comprendre à l'arrière au moins un organe interrupteur apte à coopérer mécaniquement avec un organe mécanique menant situé dans l'appareil principal et dont le mouvement traduit un changement d'état de cet appareil.

La description détaillée qui suit, avec référence à un mode de réalisation donné àtitre d'exemple et représenté par les dessins annexés, permettra d'expliciter l'invention.

La figure 1 représente schématiquement un appareil de départ-moteur équipé du bloc additif selon l'invention.

La figure 2 est une vue schématique du même appareil, présentant une composition qui permet l'inversion de sens de marche du moteur.

La figure 3 est le schéma d'un exemple de réalisation d'un bloc additif.

La figure 4 montre en perspective un bloc additif apte àcommuniquer avec des câbles de communication parallèles.

La figure 5 montre en perspective une partie d'un bloc additif apte à communiquer avec un bus bifilaire.

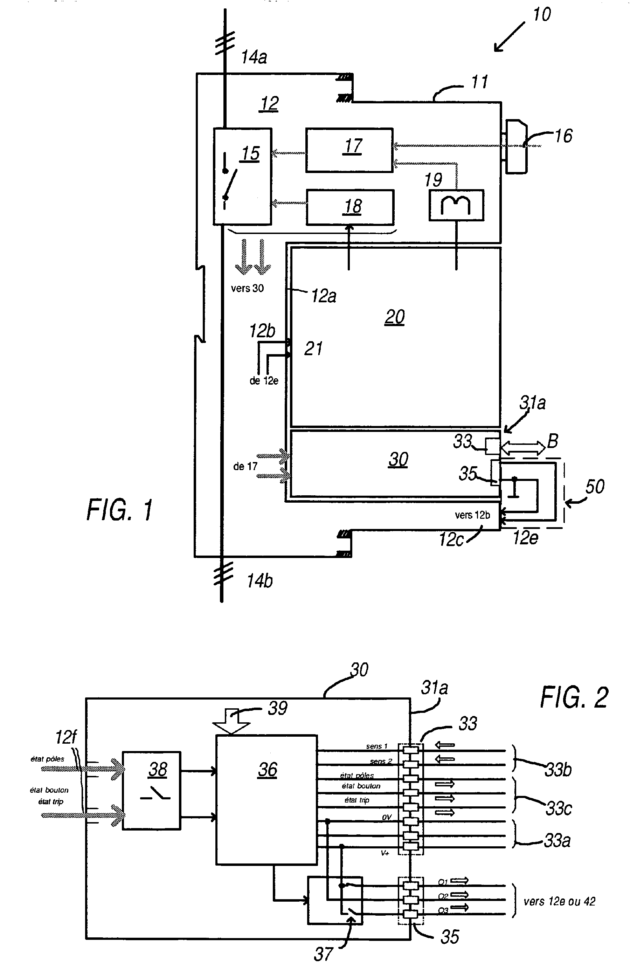

L'appareil de départ-moteur illustré sur la figure 1 comprend un appareil principal multipolaire 10, ici composé d'un boîtier principal 11 qui inclut un socle 12 à constituants électromécaniques, et un bloc ou module électronique 20 à fonction de protection, fixé de manière amovible au socle du boîtier principal. L'appareil de départ-moteur peut être constitué différemment, soit de manière monobloc, soit avec un bloc disjoncteur et un bloc contacteur.

Le socle électromécanique 12 comporte des bornes de puissance amont 14a, à relier à une source d'alimentation, et des bornes de puissance aval 14b, à relier à une charge telle qu'un moteur. Des lignes de puissance internes dotées de pôles interrupteurs mécaniques 15 relient les bornes 14a, 14b. Un bouton de commande manuelle 16, capable de prendre au moins une position "marche" et une position "arrêt", agit par l'intermédiaire d'un mécanisme d'ouverture et fermeture 17 sur les contacts mobiles des pôles 15. Les liaisons mécaniques sont indiquées par des flèches en grisé sur la figure 1.

Le bloc électronique de protection 20 communique par des connecteurs et conducteurs électriques appropriés avec un déclencheur magnétique de surintensité 18 et avec un électroaimant 19 de commande volontaire de marche-arrêt, le déclencheur 18 et l'électroaimant 19 étant situés dans le socle 12. En particulier, le bloc de protection 20 présente à l'arrière, vers une face 12a du socle 12 orientée vers l'avant et cachée par le bloc quand il est monté, deux connexions 21 d'alimentation et de commande de la bobine de l'électroaimant 19, au contact de connexions complémentaires prévues sur la face 12a.

Un bloc additif 30 de type mixte électromécanique/électronique est rapporté de façon interchangeable dans un espace situé au-dessous du bloc électronique de protection 20 et au-dessus d'une avancée inférieure 12c du socle électromécanique 12, entre des ailes verticales 12d du socle. Il comprend un boîtier 31 présentant une face avant 31 a, une face arrière 31 b, des faces haute 31 c et basse 31d et latérales 31e,31f. Dans le cas où l'appareil de départ-moteur serait réalisé différemment de ce qui est représenté, le bloc additif serait rapporté par insertion dans un logement adéquat.

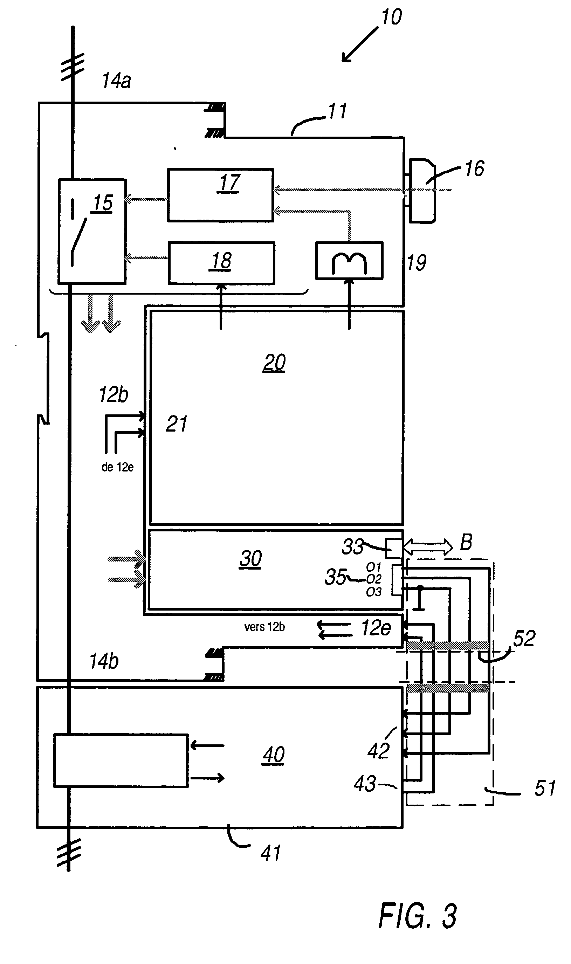

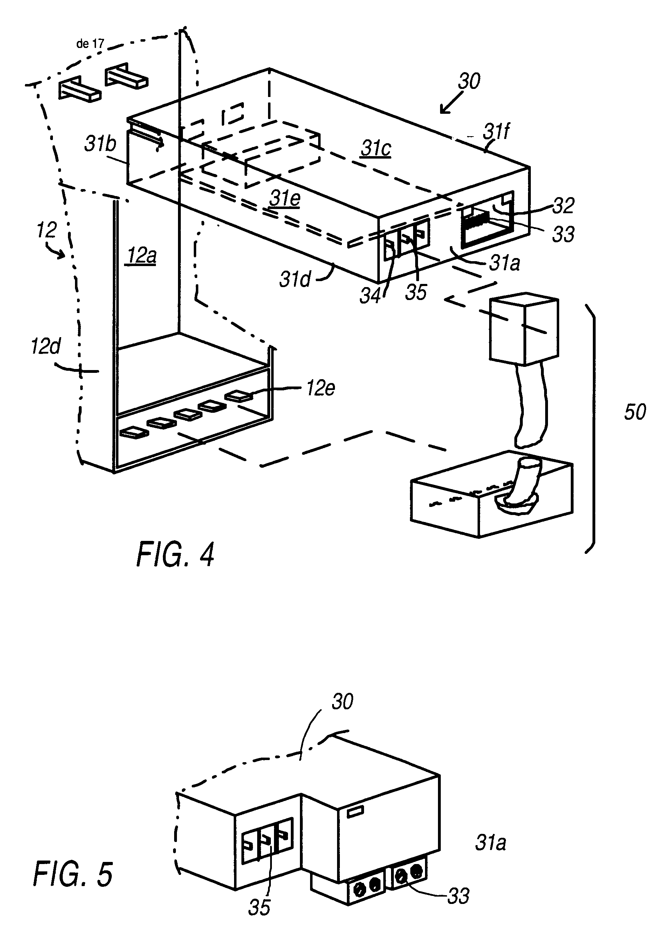

Dans la face avant 31 a du bloc additif 30 sont prévues (voir figure 4) une ouverture 32 pour un connecteur multibroches 33 d'entrée-sortie et une ouverture 34 pour un connecteur 35 de sortie à trois broches 35a désignées par O1,O2,O3. Le connecteur 33 est destiné à se connecter à des conducteurs d'alimentation et de communication externe en bus ou en nappe. Il comprend de préférence des broches d'alimentation 33a (à savoir une borne de potentiel V+ et une borne de potentiel 0V), des broches d'entrée de signal 33b et des broches de sortie de signal 33c. Aux broches 33b peuvent par exemple être appliqués en entrée des signaux de commande déterminant un premier ou un deuxième sens de marche ; aux broches 33c peuvent par exemple être appliqués en sortie des signaux significatifs de l'état des pôles, de l'état du bouton, de l'état déclenché de l'appareil, etc. Dans la forme d'exécution représentée, le connecteur 33 peut avantageusement être du type RJ45. La liaison des broches 35a du connecteur de sortie 35 avec l'appareil principal s'effectue différemment suivant que l'appareil est monté en mode simple (figure 1) - organe d'interconnexion 50 - ou en mode inverseur (figure 3)- organe d'interconnexion 51.

Au circuit de traitement 36 du bloc additif 30 sont associés dans ce bloc deux interrupteurs 37 situés sur deux conducteurs respectifs reliant une broche d'entrée d'alimentation 33a de potentiel V+ aux broches de sortie O1 et respectivement O3. D'autre part, une broche d'entrée d'alimentation 33a de potentiel 0V est reliée à la broche de sortie O2. Deux interrupteurs mécaniques 38 situés dans le bloc additif 30 sont sollicités par le mécanisme 17 au moyen de doigts d'actionnement 12f pour commuter, l'un en fonction de l'état ouvert ou fermé des pôles de puissance 15 de l'appareil, l'autre en fonction de l'état du bouton 16 ou de l'état déclenché de l'appareil. Dans une variante de réalisation, une liaison électrique 39 est établie avec le module de protection 20, par le biais de contacts appropriés entre les organes 20 et 30, pour livrer au circuit de traitement 36, et donc au bus relié aux broches 33c, des informations d'état plus évoluées, telles que le niveau d'intensité de déclenchement, etc..

Dans un mode de réalisation simple, c'est-à-dire sans inverseur (figure 1), les broches O1,O2, respectivement aux potentiels V+ et 0V, sont reliées à des broches d'entrée 12e du socle 12 de l'appareil, tandis que la broche O3 reste non connectée. L'organe d'interconnexion 50 assure alors la connexion entre les broches de sortie 35 O1,O2 de l'additif et les broches d'entrée 12b de l'appareil (voir figure 4).

Dans un mode de réalisation avec inverseur 40 (figure 3), les broches O1,O3 sont reliées à la broche d'entrée V+ par des interrupteurs respectifs 37 assurant la mise sous tension exclusive de l'une ou l'autre en fonction du sens de marche souhaité (direct ou inverse), tandis que la broche O2 est reliée à une entrée de mise à la terre de l'inverseur 40. Celui-ci présente un boîtier 41 doté de broches d'entrée 42 à connecter aux broches de sortie 35 O1,O2,O3 du bloc additif et de broches de sortie 43 à connecter aux broches d'entrée 12e du socle 12. Comme indiqué en 52, le bloc d'interconnexion 51 est alors agencé pour permettre l'accès aux vis des bornes de puissance aval 14b de l'appareil.

Un bloc additif permettant la connexion àun bus bifilaire, par exemple de type AS-i, est illustré par la figure 5.

## Revendications

1. Bloc additif accouplable à un appareil électrique principal à contacts de puissance séparables, et comprenant un boîtier doté notamment d'une face avant et d'une face arrière et rapporté frontalement contre ou dans l'appareil principal,
***caractérisé par le fait que*** le boîtier (31) du bloc additif (30) présente sur sa face avant (31 a)
- des premières connexions (33), à fonction d'entrée-sortie, aptes à la connexion de conducteurs de communication, notamment de conducteurs de bus, assurant la liaison avec un dispositif de commande et de surveillance de l'appareil principal,
- des secondes connexions (35), à fonction de sortie, aptes à la connexion de conducteurs de liaison avec les bornes d'entrée de commande de l'appareil principal.

2. Bloc additif selon la revendication 1, **caractérisé par le fait que** les premières connexions (33) sont des broches rassemblées dans un connecteur situé à l'avant du boîtier du bloc additif, et comprennent des connexions d'entrée (33b) de commande de l'appareil principal, ainsi que des connexions (33c) de sortie de signalisation de l'état de l'appareil principal.

3. Bloc additif selon la revendication 1, **caractérisé par le fait que** les premières connexions (33) sont rassemblées dans un connecteur avant du boîtier du bloc additif, et comprennent des connexions d'alimentation (33a) d'un circuit électronique de traitement (36).

4. Bloc additif selon la revendication 1, **caractérisé par le fait que** les secondes connexions (35) sont au nombre de trois, deux connexions (O1,O2) étant affectées à un signal de marche-arrêt et la troisième connexion (03) à un signal d'inversion de sens de marche.

5. Bloc additif selon la revendication 1, **caractérisé par le fait que** le bloc additif (30) comprend à l'opposé de la face avant (31a) au moins un organe interrupteur (38) apte à coopérer mécaniquement avec un organe mécanique menant situé dans l'appareil principal et dont le mouvement traduit un changement d'état de cet appareil.

## Claims

1. Add-on unit suitable for coupling to a main electrical appliance with separatable power contacts, and comprising a housing equipped in particular with a front face and a rear face and mounted frontally against or into the main appliance,
***characterised by** the fact that* the housing (31) of the add-on unit (30) presents on its front face (31 a)
- some first connections (33), with an input-output function, suitable for the connection of communication conducts, particularly bus conductors, assuring the link with a device for the control and monitoring of the main appliance,
- some second connections (35), with an output function, suitable for the connection of conductors linking with the command input terminals of the main appliance.

2. Add-on unit according to claim 1, **characterised by** the fact that the first connections (33) are pins assembled in a connector situated on the front of the housing of the add-on unit and comprise input connections (33b) to command the main appliance, and output connections (33c) to signal the status of the main appliance.

3. Add-on unit according to claim 1, **characterised by** the fact that the first connections (33) are assembled in a front connector of the housing of the add-on unit, and comprise supply connections (33a) for an electronic processing circuit (36).

4. Add-on unit according to claim 1, **characterised by** the fact that the second connections (35) are three in number, two connections (01,02) being allocated to an on-off signal and the third connection (03) to a signal of the reversal of the direction of operation.

5. Add-on unit according to claim 1, **characterised by** the fact that the add-on unit (30) comprises opposite the front face (31 a) at least one switching component (38) suitable to co-operate mechanically with a leading mechanical component situated in the main appliance and whose movement reflects a change in status of that appliance.

## Patentansprüche

1. Zusatzeinheit, die mit einem elektrischen Hauptgerät mit trennbaren Leistungskontakten gekoppelt werden kann und ein Gehäuse enthält, das insbesondere mit einer Vorderseite und mit einer Rückseite versehen und stirnseitig an oder in das Hauptgerät angebaut ist, **dadurch gekennzeichnet, dass** das Gehäuse (31) der Zusatzeinheit (30) auf seiner Vorderseite (31a) aufweist
- erste Verbindungen (33) mit Eingangs-Ausgangsfunktion, die für die Verbindung von Kommunikationsleitern, insbesondere Busleitern, geeignet sind, die die Verbindung mit einer Steuer- und Überwachungsvorrichtung des Hauptgeräts gewährleisten,
- zweite Verbindungen (35) mit Ausgangsfunktion, die für die Verbindung von Verbindungsleitern mit den Eingangssteuerklemmen des Hauptgeräts geeignet sind.

2. Zusatzeinheit nach Anspruch 1, **dadurch gekennzeichnet, dass** die ersten Verbindungen (33) in einem an der Vorderseite des Gehäuses der Zusatzeinheit befindlichen Verbinder zusammengefasste Kontaktstifte sind und Eingangsverbindungen (33b) zur Steuerung des Hauptgeräts sowie Ausgangsverbindungen (33c) zur Anzeige des Zustands des Hauptgeräts enthalten.

3. Zusatzeinheit nach Anspruch 1, **dadurch gekennzeichnet, dass** die ersten Verbindungen (33) in einem vorderen Verbinder des Gehäuses der Zusatzeinheit zusammengefasst sind und Versorgungsverbindungen (33a) einer elektronischen Verarbeitungsschaltung (36) enthalten.

4. Zusatzeinheit nach Anspruch 1, **dadurch gekennzeichnet, dass** es drei zweite Verbindungen (35) gibt, wobei zwei Verbindungen (01, 02) einem Ein-Aus-Signal zugeordnet sind und die dritte Verbindung (03) einem Laufrichtungsumkehrsignal zugeordnet ist.

5. Zusatzeinheit nach Anspruch 1, **dadurch gekennzeichnet, dass** die Zusatzeinheit (30) entgegengesetzt zur Vorderseite (31a) mindestens ein Schalterelement (38) aufweist, das mechanisch mit einem mechanischen Antriebsglied zusammenwirken kann, das sich im Hauptgerät befindet und dessen Bewegung eine Zustandsänderung dieses Geräts ausdrückt.
